# DEMANDE DE BREVET EUROPEEN

(11) **EP 0 693 636 A1**
(43) Date de publication de la demande: **24.01.1996**
(21) Numéro de dépôt: 95420186.9
(22) Date de dépôt: 04.07.1995
(51) Int. Cl.: F16D 66/02

(54) **Témoin d'usure de plaquette de frein pour véhicule automobile**

(30) Priorité: 19.07.1994 FR 9409134
(71) Demandeur: CFCA DIVISION SURMOULAGE, F-38400 Saint Martin d'Hères (FR)
(72) Inventeur: Scrabalat, Philippe, F-38180 Seyssins (FR)
(74) Mandataire: Laurent, Michel

(57) **Abrégé**

Ce témoin d'usure pour plaquette de frein pour véhicule automobile comprend un câble électrique (1) isolé dans une gaine plastique, destiné à acheminer un signal électrique signalant l'usure de la plaquette à laquelle il est fixé, et comportant à l'une de ses extrémités un embout (3, 11) monolithique surmoulé sur le câble, susceptible d'être encliqueté ou clipsé dans le siège (13) prévu à cet effet dans la partie postérieure de la plaquette (12).

L'embout (3, 11) comporte au moins deux lumières traversantes (10,19) au niveau de sa zone d'encliquetage, lui conférant une certaine élasticité de déformation permettant ledit encliquetage.

## Description

L'invention concerne un témoin d'usure de plaquette de frein pour véhicule automobile.

De manière connue, de tels témoins se présentent sous la forme d'un câble électrique, comportant, à l'une de ses extrémités, un matériau isolant, destiné à venir se fixer au niveau de la plaquette dont on désire détecter l'usure. Lorsque la plaquette s'use et atteint le matériau isolant, celui-ci s'use également jusqu'à dénuder le câble électrique, créant un contact avec le disque relié à la masse, générant de fait un signal électrique, susceptible de matérialiser, notamment au niveau du tableau de bord du véhicule, l'usure de la plaquette.

Cet embout en matériau isolant, destiné à venir se fixer au niveau d'un siège ménagé à cet effet dans la zone postérieure de la plaquette, est réalisé en un matériau présentant des caractéristiques thermiques et mécaniques compatibles avec son lieu d'implantation et sa fonction. En effet, en cours de freinage, la température au voisinage du siège de la plaquette peut facilement atteindre et dépasser 200 °C.

De fait, un tel embout est généralement réalisé en polysulfure de phénylène (PPS), en polyamide 6,6, en polyamide 46, en polyether ethercétone (PEEK) voire en PTFE (polytétrafluoroéthylène) injectable, ou en tout autre matériau présentant ces caractéristiques.

Deux problèmes se posent quant à la fabrication de ces témoins d'usure d'une part, et à leur mise en place au niveau du siège de la plaquette de frein d'autre part.

En effet, s'agissant de la réalisation, la fabrication est difficilement automatisable, compte-tenu du fait que la fixation effective du témoin sur la plaquette s'effectue par coopération de l'embout avec une rondelle-frein insérée préalablement sur le câble, avant le surmoulage de l'embout sur ce dernier. De fait, une telle rondelle-frein est difficilement distribuable en automatique, compte tenu de sa trop grande légèreté et de sa faible épaisseur, et ne permet pas d'aboutir à une fiabilité à 100 % de la réalisation des témoins d'usure correspondants.

Parallèlement, afin de présenter une efficacité réelle, cette rondelle-frein présente des ergots dirigés vers l'autre extrémité du témoin, de telle sorte à mordre sur l'embout pour s'opposer à son retrait hors du siège. Or, il n'est pas rare d'oberser des montages inversés desdites rondelles, voire même un oubli pur et simple de celle-ci, affectant ainsi la fiabilité de la fixation, et partant la détection d'usure elle-même.

Outre la technique du surmoulage, on a également proposé le principe du collage pour fixer l'embout sur le câble du témoin d'usure. Cet embout est généralement réalisé en polytétrafluoroéthylène (PTFE) et est collé sur la gaine en polychlorure de vinyl (PVC) du câble, de telle sorte à pouvoir être clipsé par l'arrière sur le siège prévu à cet effet dans la partie postérieure de la plaquette. Cependant, outre le fait que cette opération de collage n'est pas automatisable, car le contrôle correct du positionnement à l'extrémité du câble doit être opéré visuellement, la fixation effective de l'embout sur le câble doit également faire l'objet d'un contrôle manuel. De plus, compte-tenu de la température à laquelle sont soumis lesdits embouts, il convient d'utiliser des colles susceptibles également de résister à ces températures. Seules les colles bi-composants peuvent donc être utilisées pour cette application, mais elles sont d'un coût relativement élevé, grèvant de la sorte le prix de fabrication de tels témoins d'usure.

De plus, le collage n'assure pas une étanchéité fiable à 100 % de l'embout sur l'extrémité de la gaine PVC, de sorte qu'en cas d'introduction d'eau au niveau de l'extrémité non gainée du câble électrique, il y a risque de déclenchement intempestif du témoin d'usure, ce que l'on souhaite éviter.

Enfin, de tels embouts en PTFE sont de fabrication relativement onéreuse, puisqu'ils sont généralement obtenus par la technique de décolletage.

L'objet de l'invention est donc de proposer un témoin d'usure de plaquette de frein dont la fabrication soit automatisable et dont la mise en place au niveau du siège de la plaquette soit également simplifiée au maximum.

Ce témoin d'usure pour plaquette de frein pour véhicule automobile comprend un câble électrique isolé dans une gaine plastique, destiné à acheminer un signal électrique signalant l'usure de la plaquette à laquelle il est fixé, et comporte à l'une de ses extrémités un embout surmoulé sur le câble, susceptible d'être encliqueté dans le siège prévu à cet effet dans la partie postérieure de la plaquette.

Il se caractérise en ce que ledit embout comporte au moins deux lumières traversantes au niveau de sa zone d'encliquetage, lui conférant une certaine élasticité de déformation permettant ledit encliquetage.

En d'autres termes, l'invention consiste à proposer un témoin d'usure, dont l'embout destiné à venir se fixer au niveau de la plaquette est monolithique et surmoulé sur le câble, et dans lequel la fixation sur le siège s'effectue par encliquetage, le défaut d'élasticité du matériau constitutif de l'embout étant pallié par le ménagement de fentes ou lumières traversantes pour permettre cet encliquetage ou clipsage au niveau du siège de ladite plaquette.

Avantageusement, ces lumières traversantes sont sensiblement parallèles l'une à l'autre, et orientées selon l'axe de révolution de l'embout ou selon l'axe du siège au niveau duquel l'embout est reçu, et sont ménagées près de la périphérie dudit embout.

Elles s'étendent sur une distance d'au moins 2 millimètres.

Cet embout monolithique est avantageusement réalisé en polyamide 6,6, en polyamide 46, voire en polysulfure de phénylène ou en polyether ethercétone.

Dans une première forme de réalisation de l'invention dans laquelle l'embout vient se clipser par l'arrière sur le siège prévu à cet effet dans la partie postérieure de la plaquette, ledit embout présente une collerette de fixation, destinée à venir prendre appui sur la face arrière du siège contre la périphérie de l'orifice au sein duquel est clipsé ledit embout, et présente vers son extrémité libre deux saillies latérales et diamétrales, destinées à coopérer avec la face antérieure dudit siège afin d'assurer la fixation de l'embout au sein de ce dernier, la distance séparant la collerette des saillies correspondant sensiblement à l'épaisseur du siège.

Dans une autre forme de réalisation dans laquelle la fixation de l'embout au niveau du siège s'effectue par insertion en force dans ledit siège par la face antérieure de ce dernier, l'extrémité de l'embout destinée à coopérer ultérieurement avec le disque de frein présente une collerette formant butée, destinée à prendre appui sur la face antérieure du siège, ledit embout présentant en outre des saillies latérales et diamétrales, destinées à coopérer avec la face postérieure du siège, la distance séparant les saillies de la collerette correspondant sensiblement à l'épaisseur du siège.

Dans cette forme de réalisation, l'embout comporte également une rampe longitudinale inclinée, venant s'appuyer contre la collerette et destinée à empêcher la rotation de l'embout au sein du siège par coopération avec une lumière traversante ménagée au sein de la plaquette, débouchant au niveau du siège de la plaquette .

Avantageusement, les lumières traversantes sont situées au niveau des saillies latérales de fixation de l'embout.

La manière dont l'invention peut être réalisée et les avantages qui en découlent ressortiront mieux des exemples de réalisation qui suivent donnés à titre indicatif et non limitatif à l'appui des figures annexées.

La figure 1 est une représentation schématique en perspective du témoin d'usure conforme à une première forme de réalisation de l'invention, dont la figure 2 est une représentation schématique vue du dessus.

La figure 3 est une représentation schématique en perspective du témoin d'usure conformément à une seconde forme de réalisation de l'invention, dont la figure 5 est une représentation schématique en vue latérale de l'embout, et dont la figure 6 est une vue du dessus.

La figure 4 est une représentation schématique du siège de la plaquette au niveau de laquelle le témoin des figures 3, 5 et 6 est suscpetible d'être fixé.

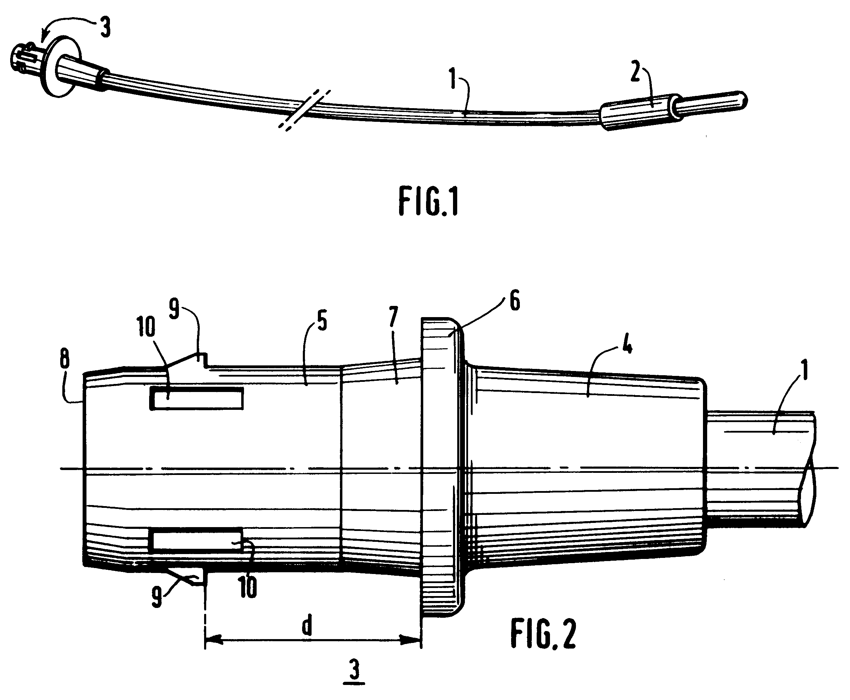

On a représenté sur la figure 1 un témoin d'usure selon une première forme de réalisation de l'invention.

Celui-ci comporte fondamentalement un câble électrique (1) isolé au moyen d'une gaine plastique, typiquement réalisée en PVC (polychlorure de vinyl).

L'une des extrémités de ce câble reçoit une prise mâle (2), destinée à venir s'enficher dans une prise femelle correspondante, située au niveau du tableau de bord ou d'un circuit relai destiné à acheminer l'information, par exemple sous la forme d'un signal lumineux au tableau de bord du véhicule considéré.

L'autre extrémité de ce câble (1) comporte un embout (3) surmoulé sur le câble (1) muni de sa gaine PVC, et destiné à permettre sa fixation par encliquetage ou clipsage au niveau du siège (13) d'une plaquette de frein (12). En d'autres termes, l'organe permettant la fixation du témoin au niveau du siège de la plaquette est issu de surmoulage et se présente sous la forme d'une seule pièce monolithique : l'embout.

De manière connue, une telle plaquette de frein destinée à venir coopérer avec la surface d'un disque solidaire de la roue du véhicule, comporte un support recevant un matériau à friction, tel que par exemple commercialisé sous la marque déposée Ferodo. Compte-tenu de cette friction, et malgré le matériau qui la compose, une telle plaquette s'use à la longue et doit être régulièrement remplacée lorsque cette usure atteint une certaine limite, faute de quoi, on aboutit à la détérioration du disque concerné.

L'objet de ce témoin d'usure est de justement matérialiser visuellement, voire auditivement cette usure pour la signaler à l'utilisateur du véhicule.

Selon l'invention, l'embout (3) est typiquement réalisé en polysulfure de phénylène (RYTON - marque déposée) voire en polybutylène téréphtalate, en polyamide 6,6 (NYLON - marque déposée), ou encore en polyamdie 46 (STANYL - marque déposée). Cet embout est donc surmoulé sur le câble (1) et ce de manière automatique.

Selon une première forme de réalisation de l'invention représentée sur les figures 1 et 2, cet embout est destiné à venir se fixer par clipsage ou encliquetage au niveau du siège (13) de la plaquette (12) par introduction arrière, c'est à dire, que l'on insère ledit embout (3) en direction de la surface de friction de ladite plaquette.

De fait, la zone "sensible" du témoin d'usure va émerger hors du siège (13) de la plaquette (12) de manière adjacente au matériau de friction constitutif de ladite plaquette.

Selon cette première forme de réalisation, l'embout (3) présente une symétrie de révolution et une forme sensiblement cylindrique. Il présente deux parties (4) et (5) sensiblement cylindriques, disposées de part et d'autre d'une collerette (6) de diamètre plus important, ladite collerette (6) étant destinée à venir prendre appui contre la face postérieure de la plaquette (12).

Fondamentalement, la partie (5) ou zone amont de l'embout (3) comporte deux lumières traversantes (10), parallèles l'une à l'autre et s'étendant parallèlement à l'axe de révolution de l'embout (3).

Corollairement, la zone amont (5) de l'embout (3) présente deux saillies latérales (9), situées sensiblement au niveau desdites lumières (10) et diamétralement opposées l'une à l'autre, destinées à coopérer avec la face antérieure du siège de la plaquette (12).

De fait, la distance **d** séparant la face amont de la collerette (6) de la zone de coopération des saillies ou ergots (9), correspond sensiblement à l'épaisseur du siège (13) de la plaquette (12).

La présence des lumières (10) au voisinage de ces deux ergots (9) permet de conférer à cette zone une certaine élasticité et donc une déformation de l'embout, permettant justement l'encliquetage ou le clipsage de l'embout au niveau du siège et plus spécifiquement l'introduction en force de l'embout (3) et donc des saillies (9) au sein du conduit constitutif du siège (13). De par la présence de ces lumières, les saillies ou ergots (9) peuvent être forcées en direction de l'intérieur de l'embout jusqu'à ce que leur enveloppe atteigne le diamètre des zones aval (4) et amont (5).

Parallèlement, la zone amont (5) et la collerette (6) sont séparées par une zone (7) de forme sensiblement tronconique, destinée à empêcher la rotation de l'embout (3) au sein du siège (13), par coopération de sa surface périphérique, de diamètre légèrement supérieur à celui du siège (13) avec le siège lui-même.

Il est donc possible d'obtenir un témoin d'usure avec embout surmoulé susceptible d'être clipsé, et ce de manière particulièrement aisée au niveau du siège des plaquettes de frein, ce que l'on ne savait faire efficacement à ce jour.

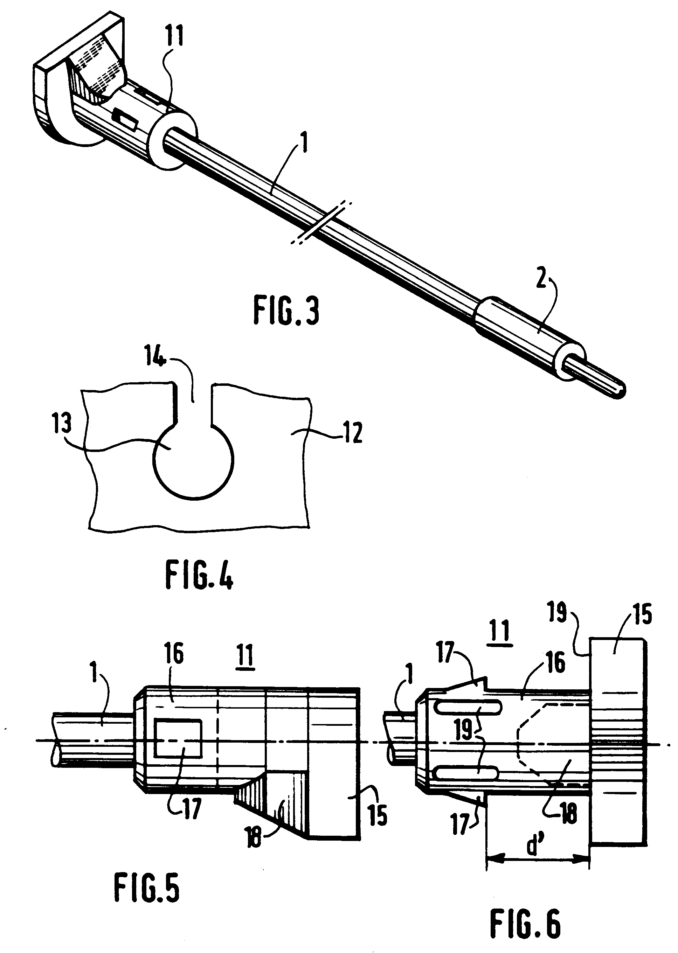

Selon une seconde forme de réalisation représentée en liaison avec les figures 3, 4, 5 et 6, l'embout (11) est destiné à être fixé toujours par clipsage ou encliquetage au niveau du siège (13) d'une plaquette (12) non plus par introduction par voie arrière, mais par voie avant. Dans cette forme de réalisation, ledit siège débouche vers l'extérieur par le biais d'une lumière traversante (14) communiquant avec l'extérieur, c'est à dire par voie latérale par rapport à la plaquette (12).

L'embout (11) est également surmoulé sur la gaine plastique PVC du câble (1) et présente les caractéristiques suivantes.

Il est fondamentalement constitué de deux parties, à savoir d'une collerette (15), constituant l'extrémité libre de l'embout, destinée à venir prendre appui sur la face antérieure du siège de la plaquette (12), et donc constitutive de la zone "sensible" destinée, après usure de la plaquette, à libérér le conducteur électrique, générant au contact du disque le signal électrique matérialisant l'usure de ladite plaquette. La collerette (15) se prolonge par une portion aval sensiblement cylindrique (16) coaxiale avec le câble (1) sur lequel l'embout est surmoulé.

Cette portion aval (16) cylindrique présente deux lumières traversantes (19), situées sensiblement au voisinage de l'extrémité de ladite portion (16). Ces lumières traversantes (19) s'étendent parallèlement l'une à l'autre et sont situées au voisinage de la périphérie de ladite portion cylindrique (16).

Au niveau de chacune de ces lumières traversantes (19) et sur la périphérie de la portion cylindrique (16), et donc diamétralement positionnées l'une par rapport à l'autre, est ménagé un ergot ou saillie (17), destiné à coopérer avec la face postérieure du siège de la plaquette (12).

Ainsi, la distance **d'** séparant la face postérieure (19) de la collerette (15) coopérant avec la face antérieure du siège de la plaquette et les saillies (17) correspond sensiblement à l'épaisseur du siège de ladite plaquette.

Ainsi, la présence des lumières traversantes (19) tout comme dans l'exemple précédent, situées au niveau des saillies (17) permet de conférer à la zone postérieure (16) une certaine élasticité et une capacité de déformation, autorisant l'introduction en force de l'embout (11) au niveau du siège (13) de la plaquette.

Plus spécifiquement, pour introduire le témoin d'usure au niveau de ce siège (13) on introduit par la biais de la lumière (14) le témoin d'usure au niveau du câble (1), ce qui est rendu possible, compte tenu du fait que la largeur de ladite lumière (14) est supérieure au diamètre du câble, en prenant soin de diriger la collerette (15) en direction du matériau de friction de la plaquette. Puis on insère l'embout (11) dans le siège (13) par le biais de la portion aval (16), et on appuie sur la collerette (15) pour forcer le passage des saillies (17) au niveau du siège de la plaquette, jusqu'à venir clipser ledit embout de part et d'autre dudit siège, ceci étant rendu possible justement par l'élasticité conférée par les fentes (19) à la zone aval (16).

Corollairement et afin d'éviter tout risque de rotation de l'embout (11) au sein du siège (13), ledit embout comporte également une rampe (18) inclinée, s'étendant entre la collerette (15) et la zone cylindrique aval (16), rampe dont la largeur correspond sensiblement au jeu près à la largeur de la lumière (14) débouchant au niveau du siège (13).

Ainsi, avec le témoin d'usure conforme à l'invention, on facilite l'étape de fabrication, compte tenu que l'embout, destiné à coopérer avec la plaquette devient systématiquement surmoulé sur le câble dudit témoin, le surmoulage étant à ce jour un procédé parfaitement automatisable. De plus, la mise en place dudit témoin au niveau de la plaquette s'effectue par simple clipsage, quel que soit le mode d'introduction de l'embout au niveau de ladite plaquette. On génère ainsi un gain de temps tout particulièrement appréciable.

## Revendications

**1/** Témoin d'usure pour plaquette de frein pour véhicule automobile comprenant un câble électrique (1) isolé dans une gaine plastique, destiné à acheminer un signal électrique signalant l'usure de la plaquette à laquelle il est fixé, et comportant à l'une de ses extrémités un embout (3, 11) monolithique, surmoulé sur le câble, et susceptible d'être encliqueté ou clipsé dans le siège (13) prévu à cet effet dans la partie postérieure de la plaquette (12),***caractérisé*** en ce que ledit embout (3, 11) comporte au moins deux lumières traversantes (10,19) au niveau de sa zone d'encliquetage, lui conférant une certaine élasticité de déformation permettant ledit encliquetage.

**2/** Témoin d'usure pour plaquette de frein selon la revendication 1, ***caractérisé*** en ce que les lumières traversantes (10, 19) sont sensiblement parallèles l'une à l'autre, et orientées selon l'axe de révolution de l'embout (3, 11) ou selon l'axe du siège au niveau duquel ledit embout (3, 11) est reçu, et sont ménagées près de la périphérie dudit embout.

**3/** Témoin d'usure pour plaquette de frein selon l'une des revendications 1 et 2, ***caractérisé*** en ce que les lumières traversantes (10, 19) s'étendent sur une distance d'au moins 2 millimètres.

**4/** Témoin d'usure pour plaquette de frein selon l'une des revendications 1 à 3, ***caractérisé*** en ce que l'embout (3, 11) est réalisé en polyamide 6,6, en polyamide 46, en polysulfure de phénylène ou en polyether ethercétone .

**5/** Témoin d'usure pour plaquette de frein selon l'une des revendications 1 à 4, dans lequel l'embout (3) vient se clipser par l'arrière sur le siège (13) prévu à cet effet dans la partie postérieure de la plaquette ***caractérisé*** en ce que ledit embout (3) présente une collerette de fixation (6), destinée à venir prendre appui sur la face arrière dudit siège contre la périphérie de l'orifice au sein duquel est clipsé ledit embout, et présente vers son extrémité libre deux saillies latérales (9) positionnées diamétralement l'une par rapport à l'autre, destinées à coopérer avec la face antérieure dudit siège afin d'assurer la fixation de l'embout au sein de ce dernier, la distance séparant la collerette (6) des saillies (9) correspondant sensiblement à l'épaisseur du siège.

**6/** Témoin d'usure pour plaquette de frein selon la revendication 5, ***caractérisé*** en ce que l'embout présente une zone intermédiaire de forme sensiblement tronconique (7), s'étendant entre la zone amont (5) et la collerette (6), destinée à coopérer avec le siège (13) de la plaquette (12), de telle sorte à s'opposer à la rotation dudit embout au sein dudit siège.

**7/** Témoin d'usure pour plaquette de frein selon l'une des revendications 1 à 4, dans lequel l'embout (11) vient se clipser par l'avant sur le siège (13) prévu à cet effet dans la partie postérieure de la plaquette (12), ***caractérisé*** en ce que l'extrémité de l'embout (11) destinée à coopérer ultérieurement avec le disque de frein présente une collerette (15) formant butée, destinée à prendre appui sur la face antérieure du siège, ledit embout (11) présentant en outre des saillies latérales (17), positionnées diamétralement l'une par rapport à l'autre, et destinées à coopérer avec la face postérieure du siège, la distance séparant les saillies (17) de la collerette (15) correspondant sensiblement à l'épaisseur du siège.

**8/** Témoin d'usure pour plaquette de frein selon la revendication 7, ***caractérisé*** en ce que l'embout (11) comporte également une rampe longitudinale inclinée (18), s'étendant entre la portion cylindrique aval (16) et la collerette (15), et destinée à empêcher la rotation de l'embout (11) au sein du siège (13) de la plaquette par coopération de ladite rampe (18) avec une lumière traversante (14) ménagée au sein de la plaquette, et débouchant au niveau du siège de la plaquette.

**9/** Témoin d'usure pour plaquette de frein selon l'une des revendications 5 à 8, ***caractérisé*** en ce que les saillies latérales (9, 17) sont ménagées au niveau des lumières traversantes (10, 19).
